# EUROPEAN PATENT APPLICATION

(11) **EP 4 837 683 A1**
(43) Date of publication of application: **11.11.2026**
(21) Application number: 26170501.6
(22) Date of filing: 02.04.2026
(51) Int. Cl.: B23K 9/095, B23K 37/04, G09B 19/24

(54) **PIPE WELDING TECHNIQUE MONITORING SYSTEMS**

(30) Priority: 24.04.2025 US 202563793990 P; 02.03.2026 US 202619553836
(71) Applicant: Illinois Tool Works Inc., Glenview IL 60025 (US)
(72) Inventor: BEATHAM, Benjamin, Glenview, 60025 (US); SCHNEIDER, Joseph C., Glenview, 60025 (US)
(74) Representative: HGF

(57) **Abstract**

In some examples, disclosed technique monitoring systems use one or more partial pipe workpieces affixed to a rotatable positioning stand to simulate the experience of performing a welding-type operation on a real life full/whole pipe workpiece. In some examples, the systems also use a monitoring device (and/or tracking sensor) configured to move in tandem with the partial pipe workpiece(s). This allows for an operator to perform, and the systems to monitor, welding-type operations at all the different positions and/or orientations that come into play with one or more real life full pipe workpieces, without having to actually use the full pipe workpiece(s) and/or several different monitoring devices (and/or tracking sensors) positioned around the full pipe workpieces (which can be significantly more expensive and/or more awkward/difficult). The technique monitoring system does all this with standard welding-type tools, making it a very attractive solution for technique monitoring, especially in training scenarios.

## Description

### CROSS REFERENCE TO RELATED APPLICATIONS

This application claims priority to, and the benefit of, U.S. Provisional Patent Application No. 63/793,990, filed April 24, 2025, entitled "Pipe Welding Technique Monitoring Systems," the entire contents of which is hereby incorporated by reference.

### TECHNICAL FIELD

The present disclosure generally relates to welding technique monitoring systems, and, more particularly, to pipe welding technique monitoring systems.

### BACKGROUND

Welding technique generally refers to the way in which a welding operator positions, moves, and/or manipulates a welding torch during a welding operation. Good welding technique can positively impact the quality of a weld. Bad welding technique can negatively impact the quality of a weld. However, it can sometimes be difficult for (e.g., less experienced) human operators to accurately judge whether welding technique is good or bad.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to pipe welding technique monitoring systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example of a welding-type system, in accordance with aspects of this disclosure.
FIGS. 2a-2e show examples of a pipe welding technique monitoring system that might be used in and/or with the welding-type system of FIG 1, in accordance with aspects of this disclosure.
FIG. 3 shows an example spatial relationship between a partial pipe workpiece and a positioning stand support arm of the pipe welding technique monitoring system of FIGS. 2a-2e, in accordance with aspects of this disclosure.
FIG. 4 is a flowchart illustrating an example operation of a training process of the pipe welding technique monitoring system of FIGS. 2a-2e, in accordance with aspects of this disclosure.
FIGS. 5a-5b show example outputs of a monitoring device of the pipe welding technique monitoring system of FIGS. 2a-2e, such as might be output during the training process of FIG. 4, in accordance with aspects of this disclosure.

The figures are not necessarily to scale. Where appropriate, the same or similar reference numerals are used in the figures to refer to similar or identical elements. For example, reference numerals utilizing lettering (e.g., partial pipe workpiece 299a, partial pipe workpiece 299b) refer to instances of the same reference numeral that does not have the lettering (e.g., partial pipe workpieces 299).

### DETAILED DESCRIPTION

Some examples of the present disclosure relate to pipe welding technique monitoring systems that monitor operator technique during a welding-type operation on a (e.g., joint of a) partial pipe workpiece. In some examples, the partial pipe workpiece is a sector (e.g., quadrant) of a full pipe cylinder. In some examples, this partial pipe workpiece is less costly to procure, and/or less awkward and/or difficult to manage, hold, and/or manipulate than a full pipe cylinder.

In some examples, the systems are configured to use a positioning stand to move the partial pipe workpiece about a support arm to different positions and/or orientations that, when taken together, effectively simulate a full pipe cylinder (provided proper sizing and/or positioning of the partial pipe workpiece). The systems thus allow an operator to gain experience performing a welding-type operation at all the different positions/orientations that come into play with a full pipe cylinder, without having to actually use a full pipe cylinder (which, again, can be significantly more expensive and/or more awkward/difficult than the partial pipe workpiece).

In some examples, the systems also use a monitoring device that is configured to move in tandem with the partial pipe workpiece. In some examples, this monitoring device movement ensures that the monitoring device (and/or its tracking sensor(s)) always has a clear line of sight to (and thus can always monitor) welding-type operations occurring proximate the partial pipe workpiece. The systems thus allow for monitoring of pipe welding-type operations without the need for (and/or expense of) several different monitoring devices (and/or tracking sensors) positioned around the pipe (e.g., to ensure unobstructed line of sight).

In some examples, the monitoring device used by the pipe welding technique monitoring systems are low cost, lightweight, and highly portable, with sensor and/or processing capabilities useful for technique monitoring. In some examples, the pipe welding technique monitoring systems can also monitor welding-type operations performed with a variety of standard welding-type tools, removing the need for costly custom components. These features make the systems an attractive solution for pipe welding technique monitoring, especially in training scenarios.

Some examples of the present disclosure relate to a welding-type system, comprising: a positioning stand having a positioning stand orientation configured for adjustment such that the positioning stand orientation can be changed from a first positioning stand orientation to a second positioning stand orientation; a workpiece holder configured to hold a workpiece, the workpiece holder being configured for attachment to the positioning stand such that a workpiece orientation of the workpiece will change from a first workpiece orientation to a second workpiece orientation when the workpiece is held by the workpiece holder and the positioning stand orientation changes from the first positioning stand orientation to the second positioning stand orientation; a sensor configured for connection to the positioning stand such that a sensor orientation of the sensor will change in tandem with the workpiece orientation or the positioning stand orientation, the sensor being configured to: capture first sensor data relating to a first welding-type operation that occurs proximate the workpiece when the workpiece is at the first workpiece orientation, and capture second sensor data relating to a second welding-type operation that occurs proximate the workpiece when the workpiece is at the second workpiece orientation; processing circuitry configured to determine a technique score based on the first sensor data and the second sensor data; and a user interface configured to output the technique score.

In some examples, the workpiece comprises a sector of a pipe. In some examples, the workpiece comprises a quadrant of a pipe. In some examples, the positioning stand orientation can be changed from the second positioning stand orientation to a third positioning stand orientation, and from the third positioning stand orientation to a fourth positioning stand orientation, the workpiece orientation of the workpiece will change from the second workpiece orientation to a third workpiece orientation, and from the third workpiece orientation to a fourth workpiece orientation, when the workpiece is held by the workpiece holder and the positioning stand orientation changes from the second positioning stand orientation to the third positioning stand orientation, and from the third positioning stand orientation to the fourth positioning stand orientation, the sensor is configured to: capture third sensor data relating to a third welding-type operation that occurs proximate the workpiece when the workpiece is at the third workpiece orientation, and capture fourth sensor data relating to a fourth welding-type operation that occurs proximate the workpiece when the workpiece is at the fourth workpiece orientation, and the processing circuitry is configured to determine the technique score based on the first sensor data, the second sensor data, the third sensor data, and the fourth sensor data.

In some examples, the positioning stand orientation can be changed from the second positioning stand orientation to one or more additional positioning stand orientations, the workpiece orientation of the workpiece will change from the second workpiece orientation to one or more additional workpiece orientations when the workpiece is held by the workpiece holder and the positioning stand orientation changes from the second positioning stand orientation to the one or more additional positioning stand orientations, the sensor is configured to capture additional sensor data relating to one or more additional welding-type operations that occur proximate to the workpiece when the workpiece is at the one or more additional workpiece orientations, and the processing circuitry is configured to determine the technique score based on the first sensor data, the second sensor data, and the additional sensor data. In some examples, the positioning stand comprises a positioning stand arm to which the workpiece is attached via the workpiece holder, the workpiece comprising a sector of a cylinder, the cylinder having a pipe radius that is larger than an arm radius of the positioning stand arm. In some examples, a distance between the workpiece and the positioning stand arm in a direction approximately perpendicular to a longitudinal axis of the positioning stand arm being approximately equal to a difference between the pipe radius and the arm radius.

In some examples, determining the pipe welding technique score comprises: determining a first technique parameter based on the first sensor data, determining a second technique parameter based on the second data, and determining the technique score based on the first technique parameter and the second technique parameter. In some examples, the first technique parameter or the second technique parameter comprises a work angle, a travel angle, a travel speed, a travel direction, a contact tip to work distance, an arc length, an aim, a filler rod feed length, a filler rod feed rate, a weave parameter. In some examples, the system further comprises a mobile device comprising the sensor or the user interface.

Some examples of the present disclosure relate to a method, comprising: capturing, by a sensor, first sensor data, relating to a first welding-type operation that occurs proximate a workpiece, the sensor being attached to a positioning stand while the positioning stand is at a first positioning stand orientation and the workpiece is held at a first workpiece orientation by a workpiece holder attached to the positioning stand; adjusting the positioning stand such that a positioning stand orientation of the positioning stand changes from the first positioning stand orientation to a second positioning stand orientation, a workpiece orientation of the workpiece changing from the first workpiece orientation to a second workpiece orientation when the positioning stand orientation changes from the first positioning stand orientation to the second positioning stand orientation; capturing, by the sensor, second sensor data relating to a second welding-type operation that occurs proximate the workpiece, while the positioning stand is at the second positioning stand orientation and the workpiece is held at the second workpiece orientation; determining a technique score via processing circuitry based on the first sensor data and the second sensor data; and outputting the technique score via a user interface.

In some examples, the workpiece comprises a sector of a pipe. In some examples, the workpiece comprises a quadrant of a pipe. In some examples, the method further comprises adjusting the positioning stand such that the positioning stand orientation changes from the second positioning stand orientation to a third positioning stand orientation and the workpiece orientation changes from the second workpiece orientation to a third workpiece orientation; capturing, by the sensor, third sensor data, relating to a third welding-type operation, while the positioning stand is at the third positioning stand orientation and the workpiece is at the third workpiece orientation; adjusting the positioning stand such that the positioning stand orientation changes from the third positioning stand orientation to a fourth positioning stand orientation and the workpiece orientation changes from the third workpiece orientation to a fourth workpiece orientation; and capturing, by the sensor, fourth sensor data, relating to a fourth welding-type operation, while the positioning stand is at the fourth positioning stand orientation and the workpiece is at the fourth workpiece orientation, wherein the technique score is determined based on the first sensor data, the second sensor data, the third sensor data, and the fourth sensor data.

In some examples, the method further comprises: adjusting the positioning stand such that the positioning stand orientation changes from the second positioning stand orientation to one or more additional positioning stand orientations and the workpiece orientation changes from the second workpiece orientation to one or more additional workpiece orientations; and capturing, by the sensor, additional sensor data relating to one or more additional welding-type operations that occur proximate the workpiece, the positioning stand is at the one or more additional positioning stand orientations and the workpiece is held at the one or more additional workpiece orientations, wherein the technique score is determined based on the first sensor data, the second sensor data, and the additional sensor data. In some examples, the positioning stand comprises a positioning stand arm to which the workpiece is attached via the workpiece holder, the workpiece comprising a sector of a cylinder, the cylinder having a pipe radius that is larger than an arm radius of the positioning stand arm. In some examples, the workpiece is held spaced from the positioning stand arm, a distance between the workpiece and the positioning stand arm in a direction approximately perpendicular to a longitudinal axis of the positioning stand arm being approximately equal to a difference between the pipe radius and the arm radius.

In some examples, determining the pipe welding technique score comprises: determining a first technique parameter based on the first sensor data; determining a second technique parameter based on the second data; and determining the technique score based on the first technique parameter and the second technique parameter. In some examples, the first technique parameter or the second technique parameter comprises a work angle, a travel angle, a travel speed, a travel direction, a contact tip to work distance, an arc length, an aim, a filler rod feed length, a filler rod feed rate, and/or a weave parameter. In some examples, the sensor and the user interface are part of a mobile device.

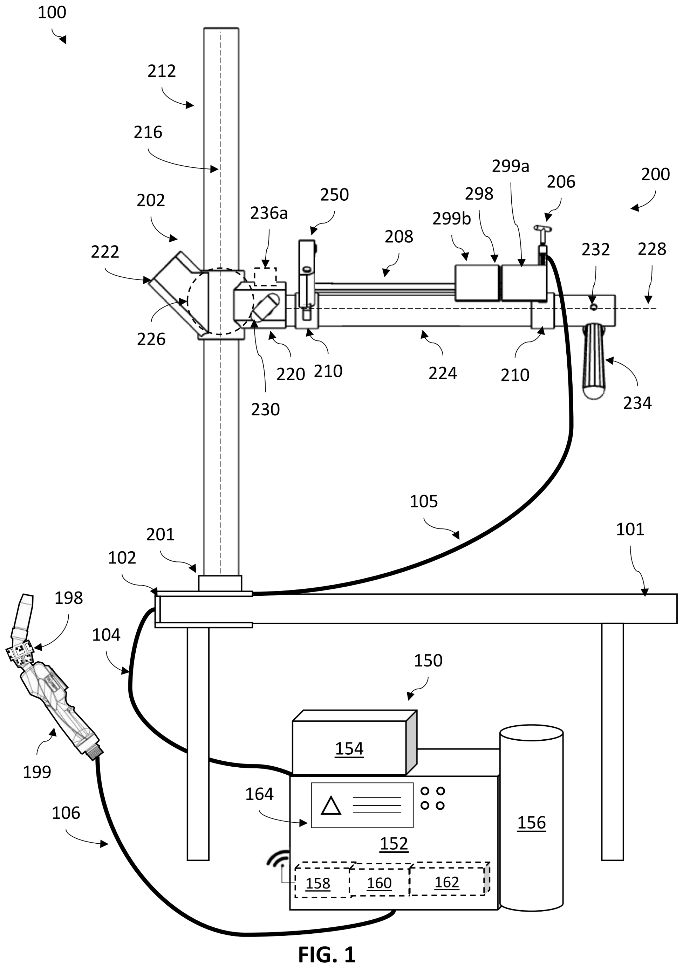

FIG. 1 shows an example of a welding-type system 100 comprising welding-type equipment 150, a welding-type tool 199, and a pipe welding technique monitoring system 200. The pipe welding technique monitoring system 200 is shown mechanically connected to a (e.g., electrically conductive and/or metallic) welding table 101 via a table connector 102. The welding-type equipment 150 is shown electrically connected to the welding table 101 (e.g., through the table connector 102) via an equipment cable 104. The welding-type tool 199 is shown electrically connected with the welding-type equipment 150 via tool cable 106.

In the example of FIG. 1, the welding-type equipment 150 includes a welding-type power supply 152, a wire feeder 154, and a gas supply 156, interconnected with one another. In some examples, the wire feeder 154 includes one or more motorized rollers configured to feed wire from a wire spool in the wire feeder 154 to the welding-type tool 199 (e.g., via the welding-type power supply 152 and/or tool cable 106). In some examples, the gas supply 156 supplies gas to welding-type tool 199 (e.g., via the welding-type power supply 152, wire feeder 154, and/or tool cable 106). In some examples, the power supply 152 is configured to supply welding-type power to the welding-type tool 199 (e.g., via tool cable 106).

In the example of FIG. 1, the power supply 152 includes equipment communication circuitry 158, control circuitry 160, and power conversion circuitry 162 interconnected with one another. In some examples, the power supply 152 communicates with one or more external devices via one or more signals sent or received by the equipment communication circuitry 158. In some examples, the power conversion circuitry 162 is configured to receive input power (e.g., from a generator, a battery, mains power, etc.) and convert the input power to welding-type output power, such as might be suitable for use by the welding-type tool 199 for welding-type operations. In some examples, the control circuitry 160 is configured to control operation of the equipment communication circuitry 158, power conversion circuitry 162, wire feeder 154, and/or gas supply 156 (e.g. via one or more control signals and/or in accordance with one or more equipment parameters).

In the example of FIG. 1, the welding-type equipment 150 further includes an operator interface 164. In some examples, the operator interface 164 comprises one or more display screens, touch screens, knobs, buttons, levers, switches, microphones, speakers, lights, and/or other mechanisms through which an operator may provide input to, and/or receive output from, the welding-type equipment 150. For example, an operator may use the operator interface 164 to input one or more equipment parameters (e.g., target voltage, target current, target wire feed speed, wire/filler type, wire/filler diameter, gas type, target gas flow rate, welding-type process, material type of workpiece, thickness of workpiece, etc.). As another example, the operator may use the operator interface 164 to view and/or otherwise understand the current equipment parameters of the welding-type equipment 150.

In some examples, the welding-type equipment 150 provides welding-type power, welding wire, and/or gas for a welding-type operation to the welding-type tool 199 (e.g., via the tool cable 106) in response to one or more (e.g., activation) signals received from the welding-type tool 199 (e.g., via the tool cable 106). In some examples (e.g., where only mock welding-type operations are performed), the welding-type equipment 150 may be omitted and/or the (e.g., activation) signals sent (e.g., wirelessly) to a monitoring device 250 by the welding-type tool 199.

While depicted in FIG. 1 as a metal inert gas (MIG) welding torch or gun configured for gas metal arc welding (GMAW), in some examples, the welding-type tool 199 may instead be a different welding-type tool 199. For example, the welding-type tool 199 may be a stick electrode holder (i.e., stinger) configured for shielded metal arc welding (SMAW), a tungsten inert gas (TIG) torch and/or filler rod configured for gas tungsten arc welding (GTAW), a welding gun configured for flux-cored arc welding (FCAW), and/or a plasma cutter. In some examples, the welding-type tool 199 may be a mock welding-type tool, and/or be configured for mock (as opposed to live) welding-type operations, such as for (e.g., virtual/augmented reality) weld training.

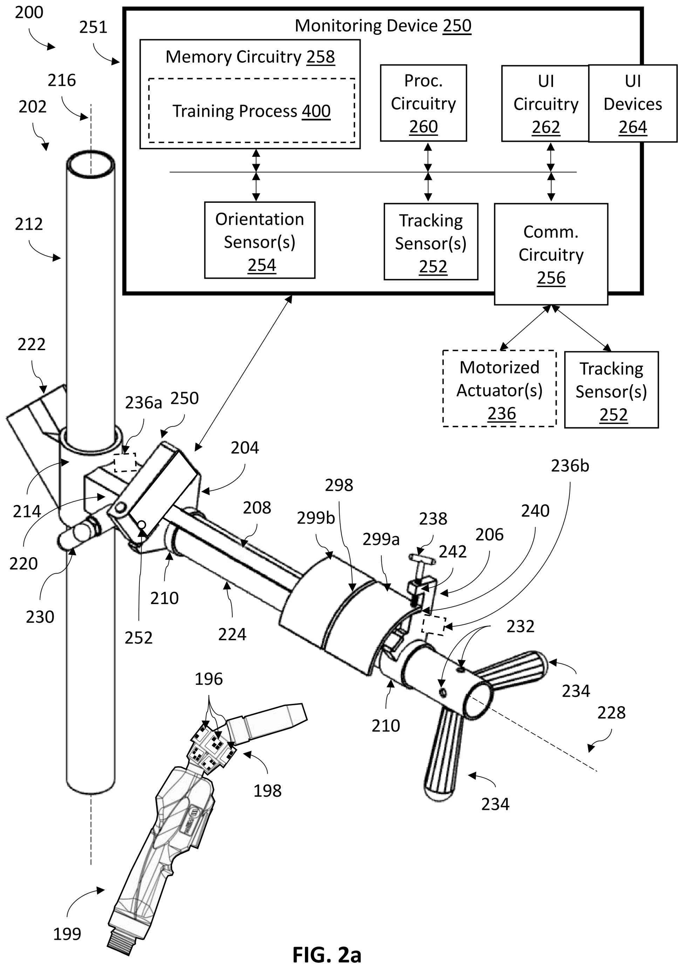

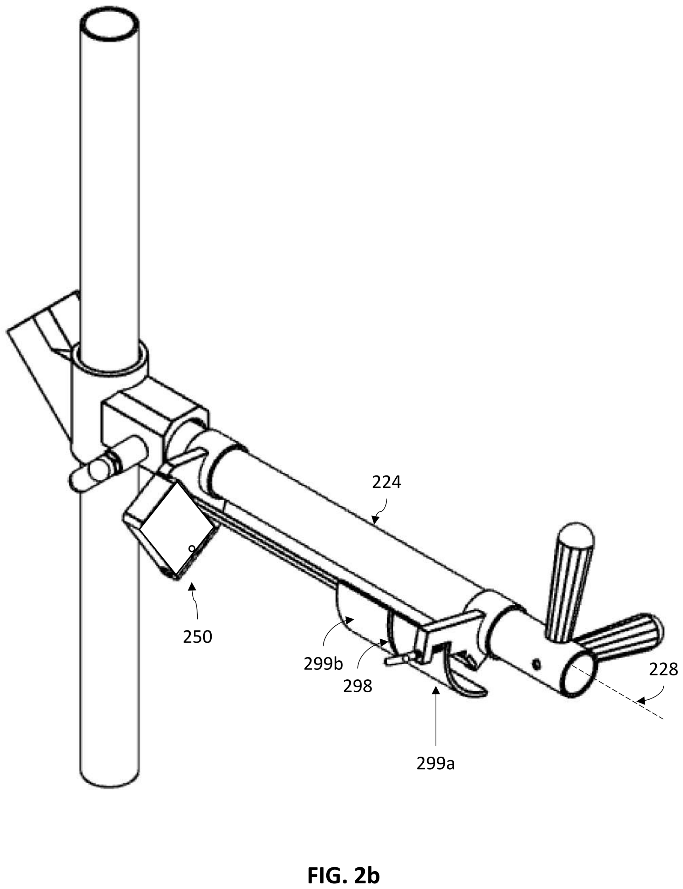

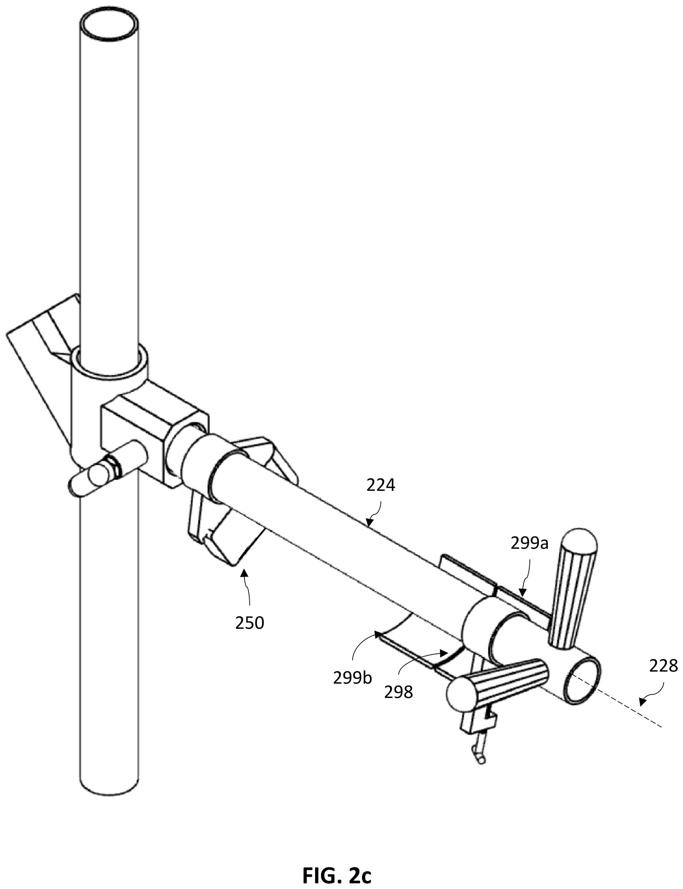

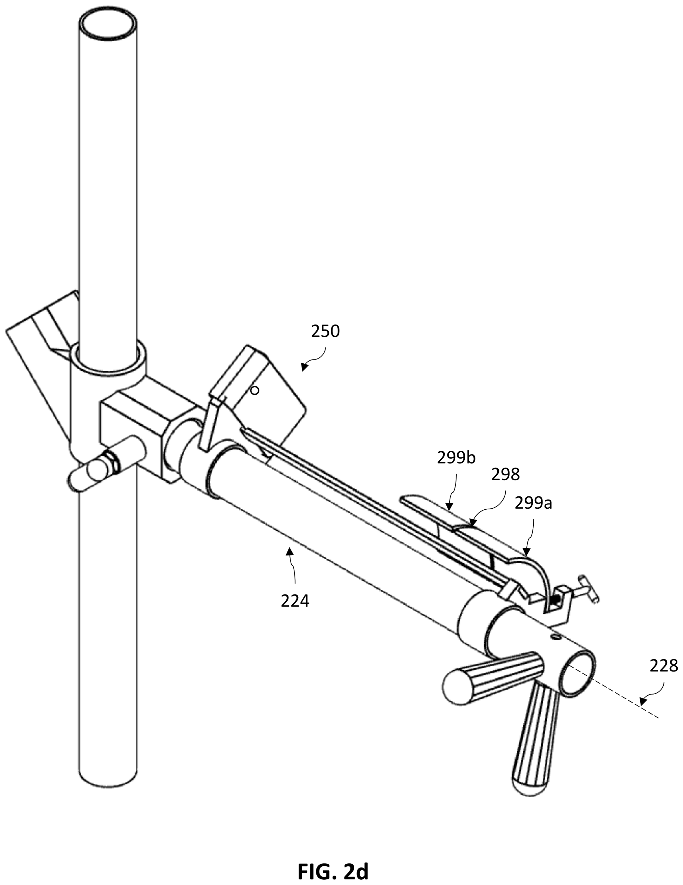

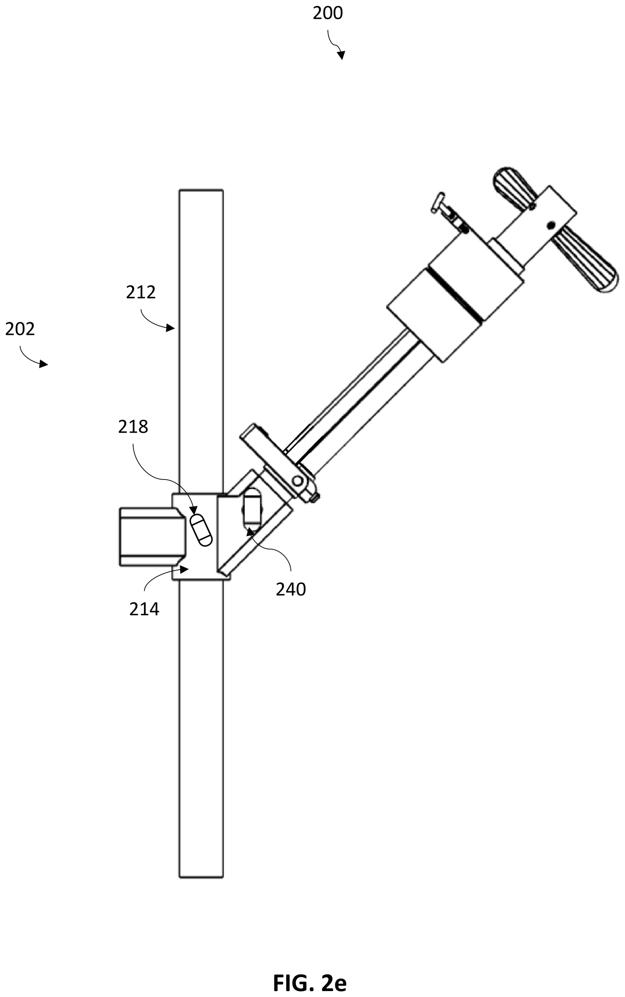

In the example of FIGS. 1-2a, the welding-type tool 199 includes a marker attachment 198 attached to a neck of the welding-type tool 199. In some examples, the marker attachment 198 is attachable to, and/or detachable from, the welding-type tool 199. As shown, the marker attachment 198 includes several markers 196 (see, e.g., FIG. 2).

In some examples, the markers 196 assist the pipe welding technique monitoring system 200 in identifying a type of welding-type tool 199, and/or tracking the position and/or orientation of the welding-type tool 199. For example, the markers 196 may be more easily recognizable by the pipe welding technique monitoring system 200 in (e.g., image) data captured by sensors of the pipe welding technique monitoring system 200 than the welding-type tool 198 itself. In some examples, the relative positions and/or orientations of markers 196 recognized in captured (e.g., image) data may be compared with known and/or stored tool (e.g., model) data to determine a type of welding-type tool 199. In some examples, known and/or stored tool (e.g., model and/or dimension) data relating to a particular welding-type tool 199 may be used in conjunction with the relative positions and/or orientations of the recognized markers 196 on the welding-type tool 198 (and/or marker attachment 198) to determine positions and/or orientations of particular portions of the welding-type tool 199 (e.g., nozzle, tip, handle, etc.).

In some examples, one or more of the markers 196 may be passive markers 196 that require no electrical power to operate, such as, for example, reflective markers 196 and/or pattern markers 196. In some examples, one or more of the markers 196 may be active markers 196 that are electrically powered, such as, for example, IR light emitting diodes (LEDs), and/or fiducial markers (e.g., IR light sources partially covered by light blocking patterns).

In some examples, positioning the markers 196 on a marker attachment 198 that is attachable to, and/or detachable from, the welding-type tool 199, allows the pipe welding technique monitoring system 200 to be easily used with existing welding-type tools 199 and/or welding-type equipment 150. And the ability to use existing welding-type tools 199 and/or welding-type equipment 150 eliminates (or substantially reduces) the need for special and/or costly customized welding-type tools 199 and/or welding-type equipment 150 to work with the pipe welding technique monitoring system 200.

FIGS. 1-2a show examples of the pipe welding technique monitoring system 200. The pipe welding technique monitoring system 200 is shown in FIGS. 1 and 2a as including a positioning stand 202, a monitoring device holder 204, a monitoring device 250 (held by the monitoring device holder 204), a workpiece holder 206, two partial pipe workpieces 299 (held by the workpiece holder 206), a support platform 208 (connecting the monitoring device holder 204 and the workpiece holder 206), and positioning stand connectors 210 (connecting the monitoring device holder 204 and the workpiece holder 206 to the positioning stand 202).

In the example of FIG. 1, the positioning stand 202 includes a positioning stand base 201 that connects the positioning stand 202 to the table connector 102 and, through the table connector 102, to the welding table 101 (to which the table connector 102 is clamped and/or otherwise connected). The positioning stand 202 is also shown as including a cylindrical positioning stand post 212 that extends away from, and is connected to, the positioning stand base 201.

In the example of FIG. 2a, the positioning stand 202 is further shown as including a cylindrical positioning stand post sleeve 214. The positioning stand post sleeve 214 is shown encircling and/or secured to the positioning stand post 212.

In some examples, the positioning stand post sleeve 214 can be moved to different positions along the positioning stand post 212 (e.g., closer to and/or farther from the positioning stand base 201). In some examples, the positioning stand post sleeve 214 can be moved to and/or between any position along the positioning stand post 212. In some examples, the positioning stand post sleeve 214 can only be moved to and/or between certain discrete positions along the post 212 (and/or only secured/connected to the positioning stand post 212 at those discrete positions).

In some examples, the positioning stand post sleeve 214 can also be rotated about the positioning stand post 212 (and/or about a longitudinal post axis 216 of the positioning stand post 212) to different orientations. In some examples, the positioning stand post sleeve 214 can be moved to and/or between any rotational orientation relative to the post axis 216. In some examples, the positioning stand post sleeve 214 can only be moved to and/or between certain discrete rotational orientations relative to the post axis 216 (and/or only secured/connected to the positioning stand post 212 at those discrete orientations).

In the example of FIG. 2e, the positioning stand post sleeve 214 includes a post sleeve adjuster 218 that can be used by an operator to adjust the position and/or orientation of the positioning stand post sleeve 214. For example, the post sleeve adjuster 218 might comprise a knob connected to a pin that extends through aligned pin holes in the positioning stand post 212 and positioning stand post sleeve 214 to secure the positioning stand post sleeve 214 at a particular position and/or orientation relative to the positioning stand post 212. In some such examples, removing the pin from the aligned pin holes (e.g., via the post sleeve adjuster 218) allows the positioning stand post sleeve 214 to be moved to a different position and/or orientation (e.g., where the pin hole of the positioning stand post sleeve 214 can be aligned with a different pin hole of the positioning stand post 212, and/or resecured via the pin of the post sleeve adjuster 218).

As another example, the post sleeve adjuster 218 might be connected to a screw fastener, such that turning the post sleeve adjuster 218 tightens and/or loosens the connection of the positioning post sleeve 214 to the positioning stand post 212 (e.g., via an internal fastening and/or coupling mechanism). In some such examples, loosening the screw connection between the positioning post sleeve 214 and the positioning stand post 212 (e.g., via the post sleeve adjuster 218) allows the positioning stand post sleeve 214 to be moved to a different position and/or orientation. Once moved, the connection between the positioning post sleeve 214 and the positioning stand post 212 can be reestablished, resecured, and/or retightened (e.g., via the post sleeve adjuster 218).

As another example, the post sleeve adjuster 218 may include a diaphragm that can be inflated and/or deflated to tighten and/or loosen the connection between the positioning post sleeve 214 and the positioning stand post 212. In yet another example, the post sleeve adjuster 218 may include a lever, a cam, a clasp, a clamp, and/or some other appropriate mechanism by which to tighten and/or loosen the connection between the positioning post sleeve 214 and the positioning stand post 212, and/or toolessly adjust the position and/or orientation of the positioning post sleeve 214.

In the examples of FIGS. 1-2a, the positioning stand 202 is also shown as including a first positioning stand arm sleeve 220 and a second positioning stand arm sleeve 222 connected to opposite sides of the positioning stand post sleeve 214. The first positioning stand arm sleeve 220 is shown extending approximately perpendicular to the positioning stand post 212 (and/or the longitudinal post axis 216). The positioning stand 202 is also shown as including a cylindrical positioning stand support arm 224. In the examples of FIGS. 1-2a, one end of the positioning stand support arm 224 is shown encircled and/or encased within the first positioning stand arm sleeve 220, with the rest of the positioning stand support arm extends approximately perpendicular to the positioning stand post 212 (and/or the longitudinal post axis 216). In some examples, the positioning stand support arm 224 can be removed from the first positioning stand arm sleeve 220 and inserted into and/or secured to the second positioning stand arm sleeve 222 (and/or vice versa).

In the example of FIGS. 1-2a, the second positioning stand arm sleeve 222 is shown extending at an approximately 45 degree angle with respect to the positioning stand post 212 (and/or the longitudinal post axis 216). In some examples, welding-type operations on a pipe are sometimes done at a similar 45 degree angle. Thus, in some examples, the second positioning stand arm sleeve 222 provides a useful means by which the positioning stand support arm 224 can be held and/or oriented at an approximately 45 degree angle with respect to the positioning stand post 212 (and/or the longitudinal post axis 216), so that an operator can gain experience performing welding-type operations on the partial pipe workpiece(s) 299 at a 45 degree angle.

In some examples, the second positioning stand arm sleeve 222 may be omitted, and/or the first positioning stand arm sleeve 220 made to be rotatable from an approximately perpendicular (e.g., 90 degree) orientation to an approximately 45 degree orientation. In some examples, the positioning stand 202 may include an arm sleeve joint 226 (e.g., as shown in dashed lines in FIG. 1) configured to rotate the first positioning stand arm sleeve 220 from the perpendicular orientation to the 45 degree orientation. In some examples, the arm sleeve joint 226 is configured to rotate the first positioning stand arm sleeve 220 to a plurality of additional orientations as well. In some examples, the arm sleeve joint 226 includes a joint lock that locks the arm sleeve joint 226 and/or first positioning stand arm sleeve 220 in/at (and/or unlocks from) a particular orientation. As show in FIG. 2a, in some examples, the arm sleeve joint 226 may be attached to, and/or be part of, the positioning stand post sleeve 214.

In some examples, the first positioning stand arm sleeve 220, the second positioning stand arm sleeve 222, and the positioning stand support arm 224 change positions when the positioning stand post sleeve 214 changes positions (e.g., due to their connection with the positioning stand post sleeve 214). Additionally, because of the connection, the first positioning stand arm sleeve 220, the second positioning stand arm sleeve 222, and the positioning stand support arm 224, in some examples, change orientations (e.g., relative to the longitudinal post axis 216) when the positioning stand post sleeve 214 changes orientations.

In some examples, in addition to being rotated about the positioning stand post 212, the positioning stand support arm 224 can also be spun about its own longitudinal arm axis 228, to change its own orientation (relative to its longitudinal arm axis 228). In some examples, the positioning stand support arm 224 can be moved to and/or between any orientation relative to the arm axis 228. In some examples, the positioning stand support arm 224 can only be moved to and/or between certain discrete orientations relative to the arm axis 228 (and/or only secured/connected to the first positioning stand arm sleeve 220 at those discrete orientations).

In the example of FIGS. 1-2a, the first positioning stand arm sleeve 220 includes an arm sleeve adjuster 230. In some examples, the arm sleeve adjuster 230 can be used to adjust the orientation of the positioning stand support arm 224 (e.g., relative to the arm axis 228). In some examples, the arm sleeve adjuster 230 can be used to secure the positioning stand support arm 224 at a particular orientation after adjustment (e.g., via a pin, fastening, diaphragm and/or other mechanism, similar to that which is discussed above with respect to the post sleeve adjuster 218).

In some examples, the arm sleeve adjuster 230 can be removed from the first positioning stand arm sleeve 220 and applied and/or attached to the second positioning stand arm sleeve 222 (and/or vice versa). In some examples, when applied and/or attached to the second positioning stand arm sleeve 222, the arm sleeve adjuster 230 can be used to secure the positioning stand support arm 224 to (and/or within) the second positioning stand arm sleeve 222. In some examples, when applied and/or attached to the second positioning stand arm sleeve 222, the arm sleeve adjuster 230 can be used to adjust the orientation of the positioning stand support arm 224 within the second positioning stand arm sleeve 222, and/or secure the positioning stand support arm 224 at a particular orientation within the second positioning stand arm sleeve 222.

FIG. 2e shows an example where the arm sleeve adjuster 230 (and positioning stand support arm 224) has been removed from the first positioning stand arm sleeve 220 and applied and/or attached to the second positioning stand arm sleeve 222. In some examples, the arm sleeve adjuster 230 is inserted through a hole in the second positioning stand arm sleeve 222 (and/or first positioning stand arm sleeve 220) to secure the positioning stand support arm 224 to (and/or within) the second positioning stand arm sleeve 222 (and/or first positioning stand arm sleeve 220).

In the examples of FIGS. 1-2a, the end of the positioning stand support arm 224 (opposite the first positioning stand arm sleeve 220) is shown with several holes 232 and several handles 234. In some examples, similar holes 232 may be included on the other end of the positioning stand support arm 224 as well (e.g., to accommodate a pin, fastener, and/or other mechanism of the arm sleeve adjuster 230). In some examples, the handles 234 are insertable through, and/or removable from, the holes 232 of the positioning stand support arm 224, so that the positioning, orientation, spacing, and/or configuration of the handles 234 may be changed to suit the preferences of an operator.

In some examples, the handles 234 may be used by an operator to manually move/rotate/spin the positioning stand support arm 224 and/or otherwise change the orientation of the positioning stand support arm 224 (e.g., relative to its longitudinal arm axis 228). In some examples, the positioning stand 202 additionally, or alternatively, includes a motorized arm actuator 236a (e.g., shown in FIGS. 1-2a in dashed lines) configured to automatically operate the arm sleeve adjuster 230 and/or move/rotate/spin the positioning stand support arm 224 to change the orientation of the positioning stand support arm 224 (e.g., relative to its longitudinal arm axis 228).

As discussed above, the monitoring device holder 204 and workpiece holder 206 are shown connected to a positioning stand support arm 224 of the positioning stand 202 via positioning stand connectors 210 (e.g., brackets, clamps, etc.). In some examples, these connections mean that the positions and/or orientations of the monitoring device holder 204 (and/or monitoring device 250 held by the monitoring device holder 204) and workpiece holder 206 (and/or partial pipe workpiece(s) 299 held by the workpiece holder 206) change when (and/or to the same degree that) the position and/or orientation of the positioning stand support arm 224 changes.

As discussed above, the monitoring device holder 204 and workpiece holder 206 are further shown connected to one another via the support platform 208. In some examples, this connection means that the positions and/or orientations of the monitoring device holder 204 (and/or monitoring device 250 held by the monitoring device holder 204) and workpiece holder 206 (and/or partial pipe workpiece(s) 299 held by the workpiece holder 206) change in tandem with (and/or to the same degree as) each other. In some examples, this coordinated positioning and/or orientation of the monitoring device 250 and partial pipe workpiece(s) 299 ensures that the monitoring device 250 is always in a position/orientation to capture sensor data relevant to a welding-type operation occurring at, on, and/or proximate a workpiece joint 298 of the partial pipe workpiece(s) 299.

FIGS. 2a-2d show examples of the monitoring device 250 and partial pipe workpiece(s) 299 moved to several different positions and/or orientations as a result of the positioning stand support arm 224 being rotated to several different orientations (e.g., relative to the arm axis 228). For example, FIG. 2b shows the positioning stand support arm 224 rotated 90 degrees counter clockwise about the longitudinal arm axis 228 from its orientation in FIG. 2a. Due to the above noted connections, the monitoring device 250 and partial pipe workpieces 299 are shown similarly rotated 90 degrees counter clockwise about the longitudinal arm axis 228. As the monitoring device 250 and partial pipe workpieces 299 are not themselves centered about the arm axis 228 (like the positioning stand support arm 224 is centered about the arm axis 228), the monitoring device 250 and partial pipe workpieces 299 are also moved to different positions (as well as different orientations) by rotation of the positioning stand support arm 224.

FIG. 2c further shows the positioning stand support arm 224 rotated an additional 90 degrees counter clockwise about the longitudinal arm axis 22. This rotation results in another similar change in position and orientation for the monitoring device 250 and partial pipe workpieces 299. Finally, FIG. 2d shows the positioning stand support arm 224 rotated a further 90 degrees counter clockwise about the longitudinal arm axis 228. This rotation also results in a similar change in position and orientation for the monitoring device 250 and partial pipe workpieces 299. As the partial pipe workpieces 299 shown in FIGS. 2a-2d are quarter pieces/sectors of a full pipe cylinder, and 90 degrees is a quarter of a full circular rotation, in some examples, the four 90 degree offset positions and/or orientations to which the partial pipe workpieces 299 are moved/held in FIGS. 2a-2d, when taken together, effectively simulate a full/whole pipe cylinder.

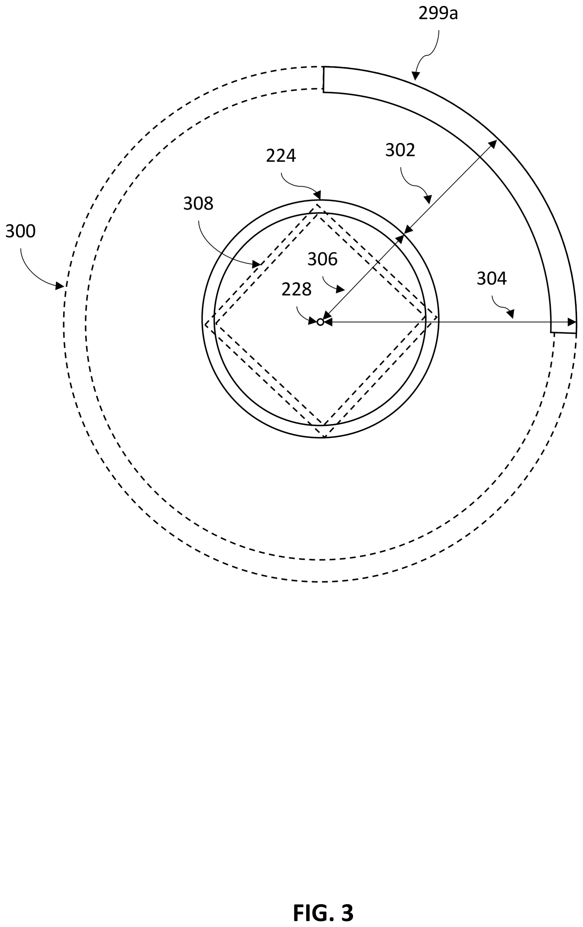

In some examples, in order to effectively simulate a full/whole pipe cylinder, the positioning stand support arm 224 and partial pipe workpieces 299 must be properly sized, proportioned, and/or positioned. FIG. 3 is a diagram showing an example of proper sizing, proportioning, and/or positioning of the positioning stand support arm 224 and/or partial pipe workpiece(s) 299.

While FIGS. 1-2d show two partial pipe workpieces 299 abutting (and/or connected to) one another at a joint 298, and FIG. 3 only shows one partial pipe workpiece 299a (e.g., due to the end perspective of the drawing figure), in some examples, the proportioning, sizing, and/or positioning of the partial pipe workpiece 299a shown in FIG. 3 applies in a similar (and/or identical) way to the partial pipe workpiece 299b.

In the example of FIG. 3, the partial pipe workpiece 299a is shown as a quarter sector (and/or quadrant) of a full/whole cylindrical pipe 300. In some examples, were there four of the partial pipe workpiece 299a connected together end to end about the arm axis 228, the partial pipe workpieces 299a would form the full/whole cylindrical pipe 300. While shown as a quadrant (and/or 1/4^{th}) of a full/whole cylindrical pipe 300, in some examples, the partial pipe workpiece 299 may instead be some other fractional portion (and/or fractional sector) of the full/whole cylindrical pipe 300 (e.g., 1/2, 1/3rd, 1/6th, 1/8th, etc.).

In the example of FIG. 3, the (e.g., outer surface of the) partial pipe workpiece 299a is shown spaced from the (e.g., outer surface of the) positioning stand support arm 224 at a distance 302. The distance 302 is shown as being measured in a direction that is perpendicular to the longitudinal arm axis 228 of the positioning stand support arm 224. As shown, the distance 302 between the outer surface of the positioning stand support arm 224 and the outer surface of the partial pipe workpiece 299a is approximately equal to a difference between an outer pipe radius 304 (and/or outer radius of curvature) of the partial pipe workpiece 299a and the outer arm radius 306 of the positioning stand support arm 224.

In some examples, if the positioning stand support arm 224 and/or the partial pipe workpiece 299a were not so sized, proportioned, and/or positioned, the partial pipe workpiece(s) 299 would be less able to effectively and/or accurately simulate the full/whole pipe 300. For example, if the distance 302 between the partial pipe workpiece 299a and positioning stand support arm 224 were more or less, the resulting full/whole pipe 300 would not be centered about the arm axis 228. In some examples, such improper positioning (e.g., due to improper distance 302) can disrupt the appearance, illusion, and/or effective simulation of a full/whole pipe 300 (e.g. ,when the positioning stand support arm 224 is rotated about the arm axis 228).

In some examples where the positioning stand support arm 224 is a polygonal prism 308 rather than a cylindrical support arm 224, the outer arm radius 306 may be a radius of a cylinder circumscribing the polygonal prism. FIG. 3, for example, shows a (e.g., rectangular) polygonal prism 308 circumscribed by the cylindrical support arm 224. In some such examples, the outer arm radius 306 of the polygonal prism 308 is considered to be the same as the outer arm radius 306 of a cylinder circumscribing the polygonal prism 308.

In the examples of FIGS. 1-2e, the workpiece holder 206 holds the partial pipe workpiece(s) 299 at an appropriate distance (e.g., the distance 302) from the positioning stand support arm 224. In some examples, the workpiece holder 206 is configured to hold the partial pipe workpiece(s) 299 in place so that the workpiece 299 remains stationary at the appropriate distance prior to, during, and/or after a welding-type operation.

In some examples, the workpiece holder 206 is comprised of an electrically conductive material (e.g., to help form and/or facilitate a welding circuit with the partial pipe workpiece 299). In some examples, the one or more partial pipe workpieces 299 held by the workpiece holder 206 are also comprised of an electrically conductive material. In some examples, the electrically conductive material of the workpiece holder 206 may facilitate electrical conduction between the partial pipe workpiece(s) 299 and an electrical cable 105 that is attached to (and/or electrically connected with) the workpiece holder 206 (see, e.g., FIG. 1).

In the example of FIG. 1, the pipe welding technique monitoring system 200 is shown as being electrically connected with the table connector 102 and/or the (e.g., electrically conductive) welding table 101 via an electrical cable 105. In particular, the electrical cable 105 is shown as being connected with the workpiece holder 206 of the pipe welding technique monitoring system 200 (though, in some examples, the electrical cable 105 may alternatively, or additionally directly connect to/with the partial pipe workpiece(s) 299). In some examples, the electrical cable 105 may be needed to make electrical connection between the pipe welding technique monitoring system 200 and the welding table 101 because some components of the positioning stand 202 (e.g., the positioning stand post sleeve 214 and/or first positioning stand arm sleeve 220) are comprised of electrically insulating material (e.g., plastic).

While shown as only directly holding the partial pipe workpiece 299a in the examples of FIGS. 1-2a, in some examples, the workpiece holder 206 may nevertheless indirectly hold the partial pipe workpiece 299b due to a connection between the partial pipe workpieces 299. For example, the partial pipe workpieces 299 may be (at least partially) connected to one another via one or more (e.g., tack) welds, fasteners, clamps, and/other mechanisms, such that the workpiece holder 206 can indirectly hold the partial pipe workpiece 299b by directly holding the partial pipe workpiece 299a. In some examples, more than one partial pipe workpiece 299 may alternatively, or additionally, be directly held by the workpiece holder 206.

In the example of FIG. 2a, the workpiece holder 206 comprises a workpiece clamp. The workpiece holder 206 is shown as holding (and/or clamping) the partial pipe workpiece 299a between a clamp screw 238 of the workpiece holder 206 and a clamp pad 240 of the workpiece holder 206. The clamp screw 238 is shown as having screw threads that engage with complementary screw threads of a clamp screw holder 242 of the workpiece holder 206. In some examples, the clamp screw 238 can be moved closer to the clamp pad 240 by turning the clamp screw 238 in one direction, and moved farther from the clamp pad 240 by turning the clamp screw 238 in the opposite direction. In this way, a gap between the clamp screw 238 and the clamp pad 240 can be adjusted to accommodate thicker and/or thinner partial pipe workpieces 299.

In some examples, the workpiece holder 206 can be adjusted so that the distance 302 between the partial pipe workpiece(s) 299 and the positioning stand support arm 224 can be adjusted. In some examples, the distance between the partial pipe workpiece(s) 299 and the positioning stand support arm 224 can be adjusted by adjusting the distance between the clamp pad 240 of the workpiece holder 206 and the positioning stand support arm 224.

In some examples, the workpiece holder 206 is configured to extend and/or contract (e.g., via a telescoping structure) to adjust the distance 302 between clamp pad 240 of the workpiece holder 206 and the positioning stand support arm 224. In some examples, a motorized holder actuator 236b is configured to automatically extend and/or contract the workpiece holder 206 (e.g., via the telescoping structure) to adjust the distance 302 between clamp pad 240 of the workpiece holder 206 and the positioning stand support arm 224. In some examples, the ability to adjust the distance between the partial pipe workpiece(s) 299 and the positioning stand support arm 224 (e.g., via adjustment of the workpiece holder 206) allows the pipe welding technique monitoring system 200 to accommodate partial pipe workpieces 299 with different radii while still maintaining an appropriate distance 302 between the partial pipe workpiece(s) 299 and the positioning stand support arm 224.

In some examples, the pipe welding technique monitoring system 200 tracks the position(s) and/or orientation(s) of the partial pipe workpiece(s) 299 relative to a welding-type tool 199 during a welding-type operation. In some examples, the tracking of the partial pipe workpiece(s) 299 and/or welding-type tool 199 is performed using tracking sensor data captured via one or more tracking sensors 252.

In the example of FIG. 2a, some of the tracking sensors 252 are shown as part of a monitoring device 250 of the pipe welding technique monitoring system 200, while other tracking sensors 252 are shown as separate from the monitoring device 250. In some examples, the tracking sensors 252 that are separate from the monitoring device 250 communicate captured tracking sensor data to the monitoring device 250 through device communication circuitry 256 of the monitoring device 250 (and/or complementary communication circuitry of the tracking sensor(s) 252).

In some examples, the tracking sensor(s) 252 comprise one or more camera sensors (e.g., infrared cameras, visible spectrum cameras, high dynamic range cameras, etc.), acoustic sensors, optical sensors, radio frequency (RF) sensors, ultrasonic sensors, magnetic sensors, acceleration sensors, gyroscopic sensors, and/other appropriate sensors. In some examples, the sensor data captured by the tracking sensor(s) 252 may comprise one or more images, videos, sounds, temperatures, radio waves, heat waves, radiation measurements, and/or other appropriate data. In some examples, sensor data captured by the tracking sensor(s) 252 may allow the pipe welding technique monitoring system 200 to track, detect, and/or record positions, orientations, and/or movement of the welding-type tool 199, partial pipe workpiece(s) 299, and/or other objects in the welding environment (e.g., during a welding-type operation).

In the example of FIG. 2a, the monitoring device 250 is shown as including both the tracking sensor(s) 252 and one or more orientation sensors 254. In some examples, the one or more orientation sensors 254 comprise one or more inertial measurement units (IMUs). In some examples, each IMU comprises one or more accelerometers, gyroscopes, and/or magnetometers.

In some examples, one or more of the orientation sensors 254 (and/or IMU sensors) are configured to capture and/or output orientation sensor data representative and/or indicative of an acceleration (e.g., due to gravity) experienced by the orientation sensor(s) 254 and/or monitoring device 250. In some examples, the experienced acceleration includes a direction of acceleration, and therefore a direction of acceleration may be determined from the orientation sensor data.

In some examples, a first direction of acceleration may be determined and saved as a reference (e.g., when an orientation sensor 254 is turned on, initialized, calibrated, etc.). Subsequent future acceleration directions may be compared with the reference direction to determine an orientation of the orientation sensor(s) 254 (and/or of the monitoring device 250 comprising the orientation sensor(s) 254). In some examples, the orientation may be determined based on an (e.g., angular) difference between the previously recorded reference direction and the subsequent direction(s).

In the examples of FIG. 2a the monitoring device 250 having the tracking sensor(s) 252 and the orientation sensor(s) 254 is held in and/or by the monitoring device holder 204 of the pipe welding technique monitoring system 200. In some examples, the monitoring device holder 204 is comprised of an electrically insulating material (e.g., plastic, rubber, etc.). In some examples, the electrically insulating material minimizes the chance that the monitoring device holder 204 will conduct a (e.g., potentially damaging) electrical current and/or voltage from the welding-type tool 199 and/or welding-type equipment 150 to the monitoring device 250.

Because the monitoring device 250 (having the orientation sensor(s) 254) is connected with the support platform 208 (e.g., through the monitoring device holder 204), and the workpiece 299 is also connected with the same support platform 208 (e.g., through the workpiece holder 206), the orientation of both the workpiece 299 and the monitoring device 250 will change in the same way. Thus, the orientation determined from the orientation sensor data captured by the orientation sensor(s) 254 of the monitoring device 250 can be used to determine the orientation of the workpiece(s) 299 and/or workpiece joint 298 (at least relative to one axis of rotation, such as, for example, the support arm axis 228).

In some examples, the monitoring device 250 comprises a mobile device (e.g., a smartphone, tablet, e-reader, handheld gaming device, portable media player, etc.). In some examples, the monitoring device 250 comprises a digital camera device. In some examples, the monitoring device 250 comprises some other device.

In the example of FIG. 2a, the monitoring device 250 is shown as including the tracking sensor(s) 252, the orientation sensor(s) 254, device communication circuitry 256, device memory circuitry 258, device processing circuitry 260, and device UI circuitry 262 connected via a common bus. The monitoring device 250 is further shown as including a casing 251 enclosing (and/or encasing, housing, etc.) the tracking sensor(s) 252, the orientation sensor(s) 254, the memory circuitry 258, the processing circuitry 260, and the UI circuitry 262. The UI circuitry 262 is further shown (e.g., electrically) connected with UI devices 264 of the monitoring device 250.

In some examples, the UI devices 264 of the monitoring device 250 include UI input devices configured to receive input from a user to control the monitoring device 250. In some examples, the UI devices 264 of the monitoring device 250 include UI output devices configured to provide output to the user regarding the state, status, and/or operation of the monitoring device 250. Examples of input devices include touch screens, keyboards, microphones, buttons, knobs, levers, switches, dials, slides, and/or other input devices. Examples of output devices include display screens, speakers, lights, haptic devices, and/or other output devices.

In some examples, the UI circuitry 262 comprises one or more drivers for the UI devices 264. In some examples, the UI circuitry 262 is configured to generate one or more signals representative of input received via the UI devices 264 and provide the signal(s) to the bus. In some examples, the UI circuitry 262 may also be configured to control the UI device(s) 264 to generate one or more outputs in response to one or more signals (e.g., received via the bus).

In some examples, the device communication circuitry 256 includes one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the device communication circuitry 256 is configured to facilitate communication via one or more wired media and/or protocols (e.g., Ethernet cable(s), universal serial bus cable(s), etc.) and/or wireless mediums and/or protocols (e.g., cellular communication, general packet radio service (GPRS), near field communication (NFC), ultra high frequency radio waves (commonly known as Bluetooth), IEEE 802.11x, Zigbee, HART, LTE, Z-Wave, WirelessHD, WiGig, etc.). In some examples, the device communication circuitry 256 may be coupled to one or more antennas to facilitate wireless communication.

In some examples, the device communication circuitry 256 is configured to facilitate communications of the monitoring device 250. In some examples, the device communication circuitry 256 may receive one or more signals (e.g., from the welding-type tool 199, welding-type equipment 150, etc.) decode the signal(s), and provide the decoded data to the electrical bus. As another example, the device communication circuitry 256 may receive one or more signals from the electrical bus (e.g., representative of one or more inputs received via the UI circuitry 262 and/or UI devices 264) encode the signal(s), and transmit the encoded signal(s) to an external device (e.g., the welding-type tool 199, welding-type equipment 150, etc.).

In the example of FIG. 2a, the device communication circuitry 256 is shown as being in communication with one or more (e.g., external) tracking sensors 252. The device communication circuitry 256 is also shown as being in communication with the motorized actuators 236 (e.g., to facilitate automatic changes in orientation via the motorized actuator(s) 236). In some examples, the device communication circuitry 256 is in communication with other monitoring devices 250 and/or other computing devices (e.g., to assist with some of the processing).

In some examples, the device memory circuitry 258 comprises machine readable instructions. In some examples, the device processing circuitry 260 includes one or more processors, and/or is configured to execute the machine readable instructions stored in the device memory circuitry 258. In the example of FIG. 2a, the device memory circuitry 258 is shown as comprising and/or storing (e.g., machine readable instructions of) a training process 400.

In some examples, the memory circuitry 258 may also include (and/or store) one or more determined, target, present, and/or past technique parameters and/or training parameters. In some examples, timestamp information is also stored and/or associated with the (e.g., technique) parameters. In some examples, the parameters may be used and/or updated during the training process 400.

In some examples, the memory circuitry 258 may also include (and/or store) one or more different training exercises. In some examples, each training exercise may specify certain training parameters to use for the exercise, and/or specify certain technique parameters that an operator should target and/or try to achieve during the exercise.

In some examples, technique parameters include work angle, travel angle, travel speed, travel direction (e.g., clockwise or counterclockwise), contact tip to work distance, arc length, travel speed, aim, filler rod feed length, filler rod feed rate, and/or weave parameters (e.g., frequency, weave width, dwell time, etc.). In some examples, training parameters include a type of wire/filler, a type of welding-type operation, a type of welding-type tool 199 (e.g., MIG gun, TIG torch, stick electrode, plasma cutter, etc.), a type of marker attachment 198 and/or marker(s) 196, a starting orientation, an ending orientation, a number of changes in orientation, a degree of change per change in orientation, equipment parameters of the welding-type equipment (e.g., target voltage, target current, target wire feed speed, target gas flow rate, target welding-type process, etc.), workpiece parameters of the partial pipe workpiece(s) 299 (e.g., thickness, material type, pipe radius 304, curvature, width, sector size/length, sector percentage of full/whole pipe, target distance 302 from positioning stand support arm 224, etc.), and/or other information relevant to the training process 400.

In some examples, the memory circuitry 258 also includes (and/or stores) several different (e.g., rigid body) models of different welding-type tools 199, markers 196, marker attachments 196, and/or types of workpieces 299. In some examples, one or more of the models may include and/or indicate dimension information. In some examples, the model(s) may be used when identifying and/or tracking position(s) and/or orientation(s) of the welding-type tool 199 and/or workpiece 299 during the training process 400.

In some examples, during the training process 400, the pipe welding technique monitoring system 200 uses sensor data captured by the tracking sensor(s) 252 to track the position(s) and/or orientation(s) of the welding-type tool 199 (e.g., relative to the workpiece(s) 299). In some examples, the welding-type tool 199 is tracked while welding-type operations are performed at different positions and/or orientations of the partial pipe workpiece(s) 299. In some examples, the different positions and/or orientations of the partial pipe workpiece(s) 299, when taken together, amount to and/or simulate a full/whole pipe cylinder 300, thereby allowing an operator to gain experience performing a welding-type operation at all the different positions/orientations that come into play with a full pipe cylinder 300.

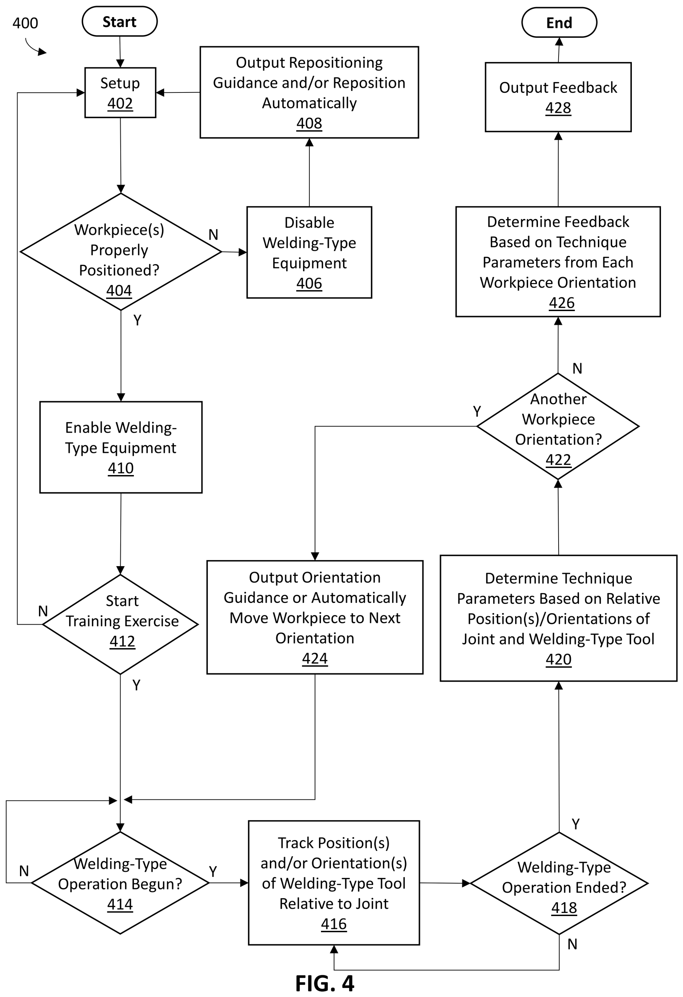

FIG. 4 is a flowchart illustrating operation of an example training process 400. In the example of FIG. 4, the training process 400 begins at block 402, where one or more setup procedures take place.

For example, a setup procedure may occur at block 402 where the pipe welding technique monitoring system 200 is setup to recognize the position(s) and/or orientation(s) of the workpiece(s) 299 and/or the workpiece joint 298. In some examples, such a setup procedure might entail tracking (e.g., markers 196 of) a calibration tool that is placed at and/or along the workpiece(s) 299 and/or the workpiece joint 298 (e.g., using sensor data captured by the tracking sensor(s) 252). In some examples, such a setup procedure might entail using sensor data captured by the tracking sensor(s) 252 to recognize the position(s) and/or orientation(s) of the workpiece(s) 299 and/or the workpiece joint 298 without the use of a calibration tool (e.g., using computer vision techniques). In some examples, the position(s) and/or orientation(s) of the workpiece(s) 299 and/or the workpiece joint 298 may be represented and/or stored in device memory circuitry 258 as one or more (e.g., x, y, z) coordinates, curvatures, arcs, radii, lengths, and/or vectors (e.g., base plate perpendicular vector(s), base plate surface vector(s), joint orientation vector(s)).

As another example, a setup procedure might occur at block 402 where the pipe welding technique monitoring system 200 is setup to recognize the type of welding-type tool 199 being used. In some examples, during such a setup procedure, the device processing circuitry 260 might determine the type of welding-type tool 199 based on user input (e.g., entered via the UI device(s) 264) and/or sensor data captured by the tracking sensor(s) 252.

As another example, a setup procedure might occur at block 402 where the pipe welding technique monitoring system 200 is setup to recognize the position(s) and/or orientation(s) of the (e.g., marker(s) 196 of the) tracking marker attachment 198 attached to the welding-type tool 199. In some examples, this tracking marker attachment 198 position/orientation data may be used in conjunction with stored known and/or stored (e.g., model and/or dimension) data to determine the position(s) and/or orientation(s) of certain portions of the welding-type tool 199 (e.g., the tip end of the tool 199) relative to the (e.g., marker(s) 196 of the) tracking marker attachment 198 attached to the welding-type tool 199.

As another example, a setup procedure might occur at block 402 where a training exercise (and/or identifier) is setup, input, and/or otherwise provided. In some examples, an operator may input (e.g., via the UI device(s) 264 and/or operator interface 164), and/or the device processing circuitry 260 might otherwise identify the training exercise.

As another example, a setup procedure might occur at block 402 where one or more parameters are setup, input, and/or otherwise provided. In some examples, an operator may input (e.g., via the UI device(s) 264 and/or operator interface 164), one or more training parameters, equipment parameters, (e.g., target) technique parameters, workpiece parameters, and/or other parameters. In some examples, the device processing circuitry 260 may identify one or more training parameters, and/or equipment parameters, technique parameters, workpiece parameters, and/or other parameters (e.g., based on the identified training exercise, captured sensor data, one or more other parameters, etc.).

In the example of FIG. 4, after the setup of block 402, the training process 400 proceeds to block 404 where the device processing circuitry 260 verifies that the one or more partial pipe workpieces 299 are correctly positioned (e.g., relative to the positioning stand support arm 224). In some examples, such a verification might entail simply outputting a prompt (e.g., via the UI device(s) 264 and/or operator interface 164) asking the operator to confirm that the one or more partial pipe workpieces 299 are correctly positioned, and/or positioned at an expected distance 302 (e.g., given the known training parameter(s) and/or workpiece parameter(s)).

In some examples, the verification of block 404 might entail the device processing circuitry 260 automatically determining whether there is more than a threshold difference between a target distance 302 and an identified distance between the partial pipe workpiece(s) 299 and the positioning stand support arm 224. In some examples, the verification of block 404 may entail using tracking sensor data and/or other (e.g., parameter) data to automatically identify one or more workpiece parameters (e.g., pipe radius 304, target distance 302, etc.), one or more positions and/or orientations of the partial pipe workpiece(s) 299, and/or the distance between the partial pipe workpiece(s) 299 and the positioning stand support arm 224. In some examples, the device memory circuitry 258 may store a known (and/or user entered) arm radius 306 of the support arm 224 to determine the target distance before comparing to the identified distance.

As shown, the training process 400 proceeds to block 406 if the verification of block 404 fails. At block 406, the device processing circuitry 260 disables the welding-type equipment 150 (e.g., via one or more command signals sent by the device communication circuitry 256). After disabling the welding-type equipment 150 at block 406, the training process 400 proceeds to block 408.

At block 408, the device processing circuitry 260 performs some corrective action. In some examples, the corrective action may simply be outputting a notification (e.g., via the UI device(s) 264 and/or operator interface 164). In some examples, the notification might instruct the operator on how to adjust the workpiece holder 206 and/or partial pipe workpiece(s) 299 so that the partial pipe workpiece(s) 299 are properly positioned.

In some examples, the corrective action of block 408 may include commanding the motorized holder actuator 236b of the workpiece holder 206 to automatically adjust the workpiece holder 206 to properly position the partial pipe workpiece(s) 299 at the target distance 302. In some examples, such a command may be sent via one or more command signals output by the device communication circuitry 256. After block 408, the training process 400 is shown as returning to block 402 (and/or block 404).

In the example of FIG. 4, once the partial pipe workpieces 299 have been determined to be properly positioned, the training process 400 proceeds to block 410, where the device processing circuitry 260 enables the welding-type equipment 150 (e.g., in case the welding-type equipment 150 was previously disabled). In some examples, the welding-type equipment 150 is enabled via one or more command signals sent by the device communication circuitry 256.

After enabling the welding-type equipment 150 at block 410, the training process proceeds to block 412, where the device processing circuitry 260 determines whether to start the training exercise. In some examples, the determination at block 412 is based on whether an input has been received from the operator indicating that the training exercise should begin (e.g., via the UI device(s) 264). If no such input is received, the training process 400 loops back to block 402.

If the device processing circuitry 260 does start the training exercise at block 412, the training process 400 proceeds to block 414, where the device processing circuitry 260 determines whether a welding-type operation has begun. In some examples (e.g., where a mock and/or simulated welding-type tool 199 is used), the determination of block 414 may be based on whether one or more signals indicative of a (e.g., mock) welding-type operation are received at the monitoring device 250 (e.g., via the device communication circuitry 256 and/or from the welding-type tool 199 and/or welding-type equipment 150). In some examples, the determination at block 414 is based on whether (e.g., arc, spark, etc.) light produced by the welding-type operation is detected (e.g., by the tracking sensor(s) 252).

In some examples, the tracking sensor(s) 252 observes and/or detects (e.g., arc, spark, etc.) light from a welding-type operation, such as, for example, by observing and/or detecting the illumination and/or brightness of the surrounding environment. In some examples, the tracking sensor(s) 252 captures tracking sensor data relating to the surrounding environment, and the device processing circuitry 260 analyzes characteristics and/or properties of the sensor data to determine whether a welding-type operation is taking place.

For example, the device processing circuitry 260 may determine a welding-type operation is occurring (and/or has started) when the tracking sensor data indicates the (e.g., average, mode, medium, etc.) brightness of the environment has increased beyond a threshold, and/or that the brightness has increased at a rate that exceeds a threshold rate. As another example, the device processing circuitry 260 may determine a welding-type operation is not occurring (and/or has stopped) when the sensor data indicates the brightness of the environment has decreased below a threshold, and/or that the brightness has decreased at a rate that exceeds a threshold rate (e.g., in terms of absolute value of the rate(s)).

In some examples where the captured tracking sensor data is representative of a captured image, the device processing circuitry 260 may analyze characteristics and/or properties of the image to determine whether a welding-type operation is taking place. In particular, the monitoring device 250 may analyze certain values of one or more Red Blue Green (RGB) color model representations to determine whether a welding-type operation is taking place. For example, the RGB color values in a hue, saturation, value (HSV), and/or hue, saturation, level (HSL), color model representation may be analyzed to determine whether a welding-type operation is taking place.

In such examples, a welding-type operation may be determined to have begun or ceased when there is an upward or downward spike (e.g., over a threshold slope/rate) of the (e.g., average, mode, medium, etc.) hue, saturation, and/or value/level in the captured image. In some examples where the tracking sensor 252 is a camera and/or optical sensor, camera/sensor exposure values may also be used to determine whether a welding-type operation is occurring (e.g., where the exposure time is automatically set and/or adjusted to keep the average brightness and/or intensity of each image approximately the same). Using the above methods, the device processing circuitry 260 can identify if and/or when a welding-type operation is occurring.

If the device processing circuitry 260 determines that a welding-type operation has begun, the training process proceeds to block 416 where the device processing circuitry 260 tracks the position(s) and/or orientation(s) of the welding-type tool 199 (e.g., relative to the workpiece(s) 299 and/or workpiece joint 298). In some examples, the device processing circuitry 260 tracks the position(s) and/or orientation(s) of the welding-type tool 199 using tracking sensor data captured by the tracking sensor(s) 252.

In some examples, the device processing circuitry 260 tracks the welding-type tool 199 by identifying and/or tracking the position(s) and/or orientation(s) of the markers 196 on the marker attachment 198 attached to the welding-type tool 199. In some examples, the position/orientation information of the markers 196 and/or marker attachment 198 may be used to determine where and/or how the (e.g., tip/nozzle end of the) welding-type tool 199 is positioned and/or oriented. For example, the position/orientation information of the markers 196 and/or marker attachment 198 may be used in conjunction with known, stored, and/or calibrated dimensions of the welding-type tool 199 to which the marker attachment 198 is attached. More particularly, the position/orientation information of the markers 196 and/or marker attachment 198 may be used in conjunction with known, stored, and/or calibrated position(s) and/or orientation(s) of the marker(s) 196 and/or marker attachment 198 relative to the position(s) and/or orientation(s) of different portions (e.g., the tip/nozzle end) of the welding-type tool 199.

In some examples, the orientation of the welding-type tool 199 may be represented and/or conceptualized in the form of a tool orientation vector. In some examples, the tool orientation vector may point parallel to an axis of an electrode, contact tip and/or nozzle assembly of the welding-type tool 199.

In the example of FIG. 4, the training process loops through block 416 until the device processing circuitry 260 determines at block 418 that the welding-type operation has ended. In some examples, the determination at block 418 is similar to (and/or the inversion of) the determination at block 414.

In the example of FIG. 4, once the welding-type operation has ended, the training process 400 proceeds to block 420, where one or more technique parameters are determined based on the relative position(s) and/or orientation(s) of the welding-type tool 199, partial pipe workpiece(s) 299, and/or workpiece joint 298. While shown in FIG. 4 as occurring after the welding-type operation has ended, in some examples, some or all of block 420 (and/or blocks 426-428) may alternatively, or additionally, occur during the welding-type operation.

In some examples, the one or more welding technique parameters include work angle, travel angle, contact tip to work distance, arc length, travel speed, aim, weave parameters, and/or other parameters relating to welding-type technique. In some examples, travel angle and/or work angle are determined based on the angle(s) between the tool orientation vector and one or more orientation vectors of the workpiece joint 298 (e.g., the joint orientation vector, base plate perpendicular vector, and/or base plate surface vector). In some examples, contact tip to work distance and/or arc length is determined based on a distance between a tip/nozzle end of the welding-type tool 199 and the workpiece joint 298. In some examples, travel speed is determined based on a change in the position of the welding-type tool 199 over time. In some examples, aim is determined based on the shortest distance along the workpiece 299 (and/or along the base plate surface vector) between a center of the workpiece joint 298 and an intersection of the workpiece 299 and (e.g., an extension of) the tool orientation vector.

After block 420, the training process proceeds to block 422 where the device processing circuitry 260 determines whether the position(s) and/or orientation(s) of the partial pipe workpiece(s) 299 need to be changed again (e.g., to simulate the full/whole pipe cylinder 300). In some examples, this determination is based on one or more training parameters (e.g., whether the position/orientation of the partial pipe workpiece(s) 299 has already been changed the number of times specified by the training parameters). In some examples, the number of changes in position/orientation is determined by device processing circuitry 260 during the setup of block 402. In some examples, the determination of the needed number of changes in position/orientation is based on one or more other parameters (e.g., 100/sector percentage).

In some examples, the determination at block 422 is based on (e.g., IMU) orientation sensor data captured by the orientation sensor(s) 254. For example, the device processing circuitry 260 may determine and/or record the (e.g., angular) orientation detected by the orientation sensor(s) 254 when the training exercise begins at block 412, and determine that no further change is needed if that same orientation has been reached again at block 422 (or would be reached if another change occurred).

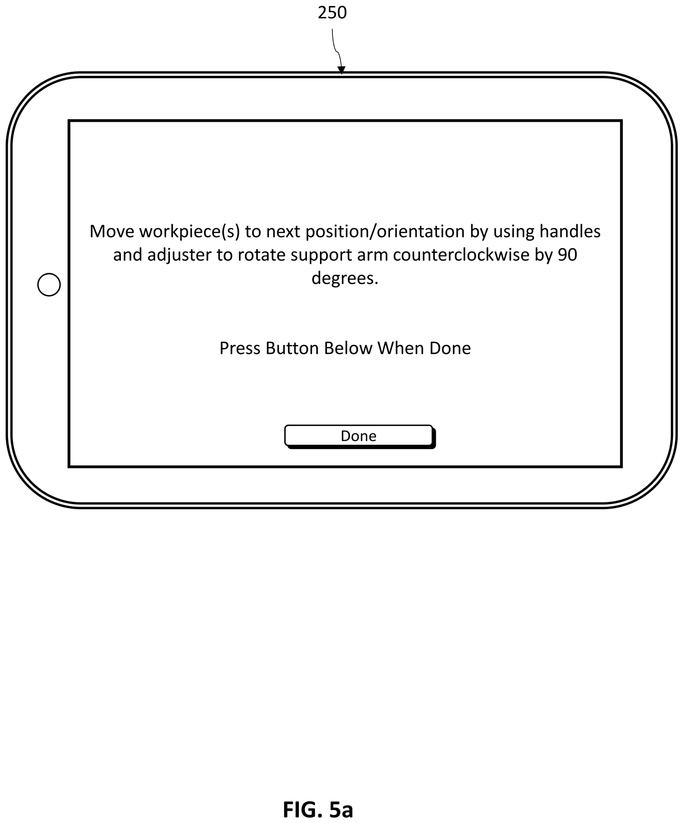

If the device processing circuitry 260 determines at block 422 that a further change in position/orientation is necessary, the training process 400 proceeds to block 424 where there is a change in the position(s) and/or orientation(s) of the partial pipe workpiece(s) 299. In some examples, the change is performed manually by the operator. In some such examples, the device processing circuitry 260 outputs instructions (e.g., via the UI device(s) 264 and/or operator interface 164) on how (and/or how much) to change the position(s) and/or orientation(s) of the partial pipe workpiece(s) 299. For example, a notification might be output instructing the operator to use the handles 234 and/or arm adjuster 230 of the positioning stand 202 to rotate the positioning stand support arm 224 by a given amount to the next position/orientation (see, e.g., FIG. 5a).

In some examples, the amount, direction, and/or degree of rotation is determined by the device processing circuitry 260 based on one or more parameters (e.g., 360/number of changes in orientation). In some examples, the training process 400 waits at block 424 until the operator provides an input indicating that the change has been made.

In some examples, the change at block 424 is performed automatically. In some such examples, the device processing circuitry 260 sends one or more rotation command signals to the motorized arm actuator 236a (e.g., via the device communication circuitry 256). In some examples, the rotation command signals indicate the amount, direction, and/or degree of rotation to be imparted by the motorized arm actuator 236a. In some examples, the motorized arm actuator 236a operates the arm adjuster 230 and/or rotates the positioning stand support arm 224 in response to the command signal(s).

As shown, once the positioning stand support arm 224 has been rotated at block 424, the training process returns to block 414. While block 424 is shown as occurring after block 422 in the example of FIG. 4, in some examples, the order may be reversed.

If the device processing circuitry 260 determines at block 422 that a further change in position/orientation is not necessary, the training process proceeds to block 426, where the device processing circuitry 260 determines feedback based on the technique parameters determined over the various iterative changes in position/orientation at block 420. In some examples, the feedback is determined based on a comparison of the determined technique parameters with one or more (e.g., stored) target technique parameters. In some examples, different target technique parameters may be used for different positions and/or orientations of the partial pipe workpiece(s) 299 and/or workpiece joint 298.

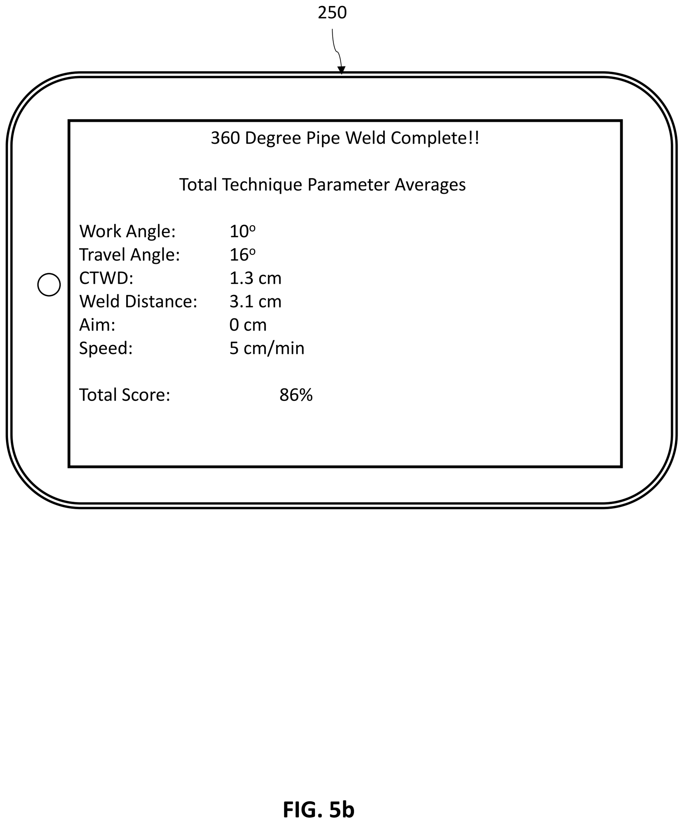

In some examples, the feedback determined at block 426 may comprise one or more ratings, scores, grades, text messages, images, videos, sounds, vibrations, and/or appropriate outputs. In some examples, the feedback may identify the determined and/or target technique parameter values at different times of the welding-type operation and/or at different positions and/or orientations of the partial pipe workpiece(s) 299 and/or workpiece joint 298. In some examples, the feedback may average determined/target technique parameter values. In some examples, partial/particular feedback may be determined for each different position and/or orientation of the partial pipe workpiece(s) 299 and/or workpiece joint 298. In some examples, overall feedback may be determined based on the partial/particular feedback (e.g., using a weighted average and/or other statistical algorithm). In the example of FIG. 4, after block 426, the training process 400 proceeds to block 428 where the feedback is output via the UI device(s) 264 of the monitoring device 250 (see, e.g., FIG. 5b, after which the training process 400 ends.

In some examples, the disclosed pipe welding technique monitoring system 200 uses one or more partial pipe workpieces 299 affixed to a rotatable positioning stand 202 to simulate the experience of performing a welding-type operation on a real life full/whole pipe cylinder 300. In some examples, the rotatable positioning stand 202 is configured to move/rotate a monitoring device 250 in tandem with the partial pipe workpiece(s) 299, thus ensuring that at least one tracking sensor 252 of the monitoring device 250 is always positioned to capture tracking sensor data related to welding-type operations occurring proximate the partial pipe workpiece(s) 299. This allows for an operator to gain experience performing a welding-type operation at all the different positions/orientations that come into play with a full pipe cylinder 300, without having to actually use a full pipe cylinder 300 and/or several tracking sensors 252 positioned around the full pipe cylinder 300 (which can be more expensive and/or more awkward/difficult). The pipe welding technique monitoring system 200 does all this with standard welding-type tools 199 as well as relatively low cost, lightweight, and highly portable components, making it a very attractive solution for technique monitoring, especially in training scenarios.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As used herein, the terms "e.g.," and "for example" set off lists of one or more nonlimiting examples, instances, or illustrations.

As used herein, the term "approximately," when applied to an angle and/or orientation, means within 5 degrees of the specified angle and/or orientation. As used herein, the term "approximately," when applied to a position, means within 5 centimeters of the specified position.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, the term "processor" and/or "processing circuitry" means processing devices, apparatus, programs, circuits, components, systems, and subsystems, whether implemented in hardware, tangibly embodied software, or both, and whether or not it is programmable. The term "processor" and/or "processing circuitry" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor and/or processing circuitry may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory," "memory circuitry," and/or "memory device" means computer hardware or circuitry to store information for use by a processor and/or other digital device. The memory, memory circuitry, and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory, memory circuitry, and/or memory device(s) can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory, memory circuitry, and/or memory device(s) can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, a welding-type tool refers to a tool suitable for and/or capable of actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

As used herein, disable may mean deactivate, incapacitate, and/or make inoperative. As used herein, enable may mean activate and/or make operational.

Disabling of circuitry, actuators, and/or other hardware may be done via hardware, software (including firmware), or a combination of hardware and software, and may include physical disconnection, de-energization, and/or a software control that restricts commands from being implemented to activate the circuitry, actuators, and/or other hardware. Similarly, enabling of circuitry, actuators, and/or other hardware may be done via hardware, software (including firmware), or a combination of hardware and software, using the same mechanisms used for disabling.

Certain embodiments of the invention are described in the following clauses:
Clause 1 A welding-type system, comprising:
   a positioning stand having a positioning stand orientation configured for adjustment such that the positioning stand orientation can be changed from a first positioning stand orientation to a second positioning stand orientation;
   a workpiece holder configured to hold a workpiece, the workpiece holder being configured for attachment to the positioning stand such that a workpiece orientation of the workpiece will change from a first workpiece orientation to a second workpiece orientation when the workpiece is held by the workpiece holder and the positioning stand orientation changes from the first positioning stand orientation to the second positioning stand orientation;
   a sensor configured for connection to the positioning stand such that a sensor orientation of the sensor will change in tandem with the workpiece orientation or the positioning stand orientation, the sensor being configured to:
      capture first sensor data relating to a first welding-type operation that occurs proximate the workpiece when the workpiece is at the first workpiece orientation, and
      capture second sensor data relating to a second welding-type operation that occurs proximate the workpiece when the workpiece is at the second workpiece orientation;
   processing circuitry configured to determine a technique score based on the first sensor data and the second sensor data; and
   a user interface configured to output the technique score.
Clause 2 The welding-type system of clause 1, wherein the workpiece comprises a sector of a pipe.
Clause 3 The welding-type system of clause 1, wherein the workpiece comprises a quadrant of a pipe.
Clause 4 The welding-type system of clause 3, wherein:
   the positioning stand orientation can be changed from the second positioning stand orientation to a third positioning stand orientation, and from the third positioning stand orientation to a fourth positioning stand orientation,
   the workpiece orientation of the workpiece will change from the second workpiece orientation to a third workpiece orientation, and from the third workpiece orientation to a fourth workpiece orientation, when the workpiece is held by the workpiece holder and the positioning stand orientation changes from the second positioning stand orientation to the third positioning stand orientation, and from the third positioning stand orientation to the fourth positioning stand orientation,
   the sensor is configured to:
      capture third sensor data relating to a third welding-type operation that occurs proximate the workpiece when the workpiece is at the third workpiece orientation, and
      capture fourth sensor data relating to a fourth welding-type operation that occurs proximate the workpiece when the workpiece is at the fourth workpiece orientation, and
   the processing circuitry is configured to determine the technique score based on the first sensor data, the second sensor data, the third sensor data, and the fourth sensor data.
Clause 5 The welding-type system of clause 1, wherein:
   the positioning stand orientation can be changed from the second positioning stand orientation to one or more additional positioning stand orientations,
   the workpiece orientation of the workpiece will change from the second workpiece orientation to one or more additional workpiece orientations when the workpiece is held by the workpiece holder and the positioning stand orientation changes from the second positioning stand orientation to the one or more additional positioning stand orientations,
   the sensor is configured to capture additional sensor data relating to one or more additional welding-type operations that occur proximate to the workpiece when the workpiece is at the one or more additional workpiece orientations, and
   the processing circuitry is configured to determine the technique score based on the first sensor data, the second sensor data, and the additional sensor data.
Clause 6 The welding-type system of clause 1, wherein the positioning stand comprises a positioning stand arm to which the workpiece is attached via the workpiece holder, the workpiece comprising a sector of a cylinder, the cylinder having a pipe radius that is larger than an arm radius of the positioning stand arm.
Clause 7 The welding-type system of clause 6, wherein the workpiece is held spaced from the positioning stand arm, a distance between the workpiece and the positioning stand arm in a direction approximately perpendicular to a longitudinal axis of the positioning stand arm being approximately equal to a difference between the pipe radius and the arm radius.
Clause 8 The welding-type system of clause 1, wherein determining the pipe welding technique score comprises:
   determining a first technique parameter based on the first sensor data,
   determining a second technique parameter based on the second data, and
   determining the technique score based on the first technique parameter and the second technique parameter.
Clause 9 The welding-type system of clause 8, wherein the first technique parameter or the second technique parameter comprises a work angle, a travel angle, a travel speed, a travel direction, a contact tip to work distance, an arc length, an aim, a filler rod feed length, a filler rod feed rate, a weave parameter.
Clause 10 The welding-type system of clause 1, further comprising a mobile device comprising the sensor or the user interface.
Clause 11 A method, comprising:
   capturing, by a sensor, first sensor data, relating to a first welding-type operation that occurs proximate a workpiece, the sensor being attached to a positioning stand while the positioning stand is at a first positioning stand orientation and the workpiece is held at a first workpiece orientation by a workpiece holder attached to the positioning stand;
   adjusting the positioning stand such that a positioning stand orientation of the positioning stand changes from the first positioning stand orientation to a second positioning stand orientation, a workpiece orientation of the workpiece changing from the first workpiece orientation to a second workpiece orientation when the positioning stand orientation changes from the first positioning stand orientation to the second positioning stand orientation;
   capturing, by the sensor, second sensor data relating to a second welding-type operation that occurs proximate the workpiece, while the positioning stand is at the second positioning stand orientation and the workpiece is held at the second workpiece orientation;
   determining a technique score via processing circuitry based on the first sensor data and the second sensor data; and
   outputting the technique score via a user interface.
Clause 12 The method of clause 11, wherein the workpiece comprises a sector of a pipe.
Clause 13 The method of clause 11, wherein the workpiece comprises a quadrant of a pipe.
Clause 14 The method of clause 13, further comprising:
   adjusting the positioning stand such that the positioning stand orientation changes from the second positioning stand orientation to a third positioning stand orientation and the workpiece orientation changes from the second workpiece orientation to a third workpiece orientation;
   capturing, by the sensor, third sensor data, relating to a third welding-type operation, while the positioning stand is at the third positioning stand orientation and the workpiece is at the third workpiece orientation;
   adjusting the positioning stand such that the positioning stand orientation changes from the third positioning stand orientation to a fourth positioning stand orientation and the workpiece orientation changes from the third workpiece orientation to a fourth workpiece orientation; and
   capturing, by the sensor, fourth sensor data, relating to a fourth welding-type operation, while the positioning stand is at the fourth positioning stand orientation and the workpiece is at the fourth workpiece orientation,
   wherein the technique score is determined based on the first sensor data, the second sensor data, the third sensor data, and the fourth sensor data.
Clause 15 The method of clause 11, further comprising:
   adjusting the positioning stand such that the positioning stand orientation changes from the second positioning stand orientation to one or more additional positioning stand orientations and the workpiece orientation changes from the second workpiece orientation to one or more additional workpiece orientations; and
   capturing, by the sensor, additional sensor data relating to one or more additional welding-type operations that occur proximate the workpiece, the positioning stand is at the one or more additional positioning stand orientations and the workpiece is held at the one or more additional workpiece orientations,
   wherein the technique score is determined based on the first sensor data, the second sensor data, and the additional sensor data.
Clause 16 The method of clause 11, wherein the positioning stand comprises a positioning stand arm to which the workpiece is attached via the workpiece holder, the workpiece comprising a sector of a cylinder, the cylinder having a pipe radius that is larger than an arm radius of the positioning stand arm.
Clause 17 The method of clause 16, wherein the workpiece is held spaced from the positioning stand arm, a distance between the workpiece and the positioning stand arm in a direction approximately perpendicular to a longitudinal axis of the positioning stand arm being approximately equal to a difference between the pipe radius and the arm radius.
Clause 18 The method of clause 11, wherein determining the pipe welding technique score comprises:
   determining a first technique parameter based on the first sensor data;
   determining a second technique parameter based on the second data; and
   determining the technique score based on the first technique parameter and the second technique parameter.
Clause 19 The method of clause 18, wherein the first technique parameter or the second technique parameter comprises a work angle, a travel angle, a travel speed, a travel direction, a contact tip to work distance, an arc length, an aim, a filler rod feed length, a filler rod feed rate, and/or a weave parameter.
Clause 20 The method of clause 11, wherein the sensor and the user interface are part of a mobile device.

## Claims

1. A welding-type system, comprising:
a positioning stand having a positioning stand orientation configured for adjustment such that the positioning stand orientation can be changed from a first positioning stand orientation to a second positioning stand orientation;
a workpiece holder configured to hold a workpiece, the workpiece holder being configured for attachment to the positioning stand such that a workpiece orientation of the workpiece will change from a first workpiece orientation to a second workpiece orientation when the workpiece is held by the workpiece holder and the positioning stand orientation changes from the first positioning stand orientation to the second positioning stand orientation;
a sensor configured for connection to the positioning stand such that a sensor orientation of the sensor will change in tandem with the workpiece orientation or the positioning stand orientation, the sensor being configured to:
capture first sensor data relating to a first welding-type operation that occurs proximate the workpiece when the workpiece is at the first workpiece orientation, and
capture second sensor data relating to a second welding-type operation that occurs proximate the workpiece when the workpiece is at the second workpiece orientation;
processing circuitry configured to determine a technique score based on the first sensor data and the second sensor data; and
a user interface configured to output the technique score.

2. The welding-type system of claim 1, wherein the workpiece comprises a sector of a pipe.

3. The welding-type system of claim 1, wherein the workpiece comprises a quadrant of a pipe.

4. The welding-type system of claim 3, wherein:
the positioning stand orientation can be changed from the second positioning stand orientation to a third positioning stand orientation, and from the third positioning stand orientation to a fourth positioning stand orientation,
the workpiece orientation of the workpiece will change from the second workpiece orientation to a third workpiece orientation, and from the third workpiece orientation to a fourth workpiece orientation, when the workpiece is held by the workpiece holder and the positioning stand orientation changes from the second positioning stand orientation to the third positioning stand orientation, and from the third positioning stand orientation to the fourth positioning stand orientation,
the sensor is configured to:
capture third sensor data relating to a third welding-type operation that occurs proximate the workpiece when the workpiece is at the third workpiece orientation, and
capture fourth sensor data relating to a fourth welding-type operation that occurs proximate the workpiece when the workpiece is at the fourth workpiece orientation, and
the processing circuitry is configured to determine the technique score based on the first sensor data, the second sensor data, the third sensor data, and the fourth sensor data.

5. The welding-type system of claim 1, wherein:
the positioning stand orientation can be changed from the second positioning stand orientation to one or more additional positioning stand orientations,
the workpiece orientation of the workpiece will change from the second workpiece orientation to one or more additional workpiece orientations when the workpiece is held by the workpiece holder and the positioning stand orientation changes from the second positioning stand orientation to the one or more additional positioning stand orientations,
the sensor is configured to capture additional sensor data relating to one or more additional welding-type operations that occur proximate to the workpiece when the workpiece is at the one or more additional workpiece orientations, and
the processing circuitry is configured to determine the technique score based on the first sensor data, the second sensor data, and the additional sensor data.

6. The welding-type system of claim 1, wherein the positioning stand comprises a positioning stand arm to which the workpiece is attached via the workpiece holder, the workpiece comprising a sector of a cylinder, the cylinder having a pipe radius that is larger than an arm radius of the positioning stand arm, and optionally
wherein the workpiece is held spaced from the positioning stand arm, a distance between the workpiece and the positioning stand arm in a direction approximately perpendicular to a longitudinal axis of the positioning stand arm being approximately equal to a difference between the pipe radius and the arm radius.

7. The welding-type system of claim 1, wherein determining the pipe welding technique score comprises:
determining a first technique parameter based on the first sensor data,
determining a second technique parameter based on the second data, and
determining the technique score based on the first technique parameter and the second technique parameter, and optionally
wherein the first technique parameter or the second technique parameter comprises a work angle, a travel angle, a travel speed, a travel direction, a contact tip to work distance, an arc length, an aim, a filler rod feed length, a filler rod feed rate, a weave parameter.

8. The welding-type system of claim 1, further comprising a mobile device comprising the sensor or the user interface.

9. A method, comprising:
capturing, by a sensor, first sensor data, relating to a first welding-type operation that occurs proximate a workpiece, the sensor being attached to a positioning stand while the positioning stand is at a first positioning stand orientation and the workpiece is held at a first workpiece orientation by a workpiece holder attached to the positioning stand;
adjusting the positioning stand such that a positioning stand orientation of the positioning stand changes from the first positioning stand orientation to a second positioning stand orientation, a workpiece orientation of the workpiece changing from the first workpiece orientation to a second workpiece orientation when the positioning stand orientation changes from the first positioning stand orientation to the second positioning stand orientation;
capturing, by the sensor, second sensor data relating to a second welding-type operation that occurs proximate the workpiece, while the positioning stand is at the second positioning stand orientation and the workpiece is held at the second workpiece orientation;
determining a technique score via processing circuitry based on the first sensor data and the second sensor data; and
outputting the technique score via a user interface.

10. The method of claim 9, wherein the workpiece comprises a sector of a pipe or wherein the workpiece comprises a quadrant of a pipe.

11. The method of claim 10, further comprising:
adjusting the positioning stand such that the positioning stand orientation changes from the second positioning stand orientation to a third positioning stand orientation and the workpiece orientation changes from the second workpiece orientation to a third workpiece orientation;
capturing, by the sensor, third sensor data, relating to a third welding-type operation, while the positioning stand is at the third positioning stand orientation and the workpiece is at the third workpiece orientation;
adjusting the positioning stand such that the positioning stand orientation changes from the third positioning stand orientation to a fourth positioning stand orientation and the workpiece orientation changes from the third workpiece orientation to a fourth workpiece orientation; and
capturing, by the sensor, fourth sensor data, relating to a fourth welding-type operation, while the positioning stand is at the fourth positioning stand orientation and the workpiece is at the fourth workpiece orientation,
wherein the technique score is determined based on the first sensor data, the second sensor data, the third sensor data, and the fourth sensor data.

12. The method of claim 9, further comprising:
adjusting the positioning stand such that the positioning stand orientation changes from the second positioning stand orientation to one or more additional positioning stand orientations and the workpiece orientation changes from the second workpiece orientation to one or more additional workpiece orientations; and
capturing, by the sensor, additional sensor data relating to one or more additional welding-type operations that occur proximate the workpiece, the positioning stand is at the one or more additional positioning stand orientations and the workpiece is held at the one or more additional workpiece orientations,
wherein the technique score is determined based on the first sensor data, the second sensor data, and the additional sensor data.

13. The method of claim 9, wherein the positioning stand comprises a positioning stand arm to which the workpiece is attached via the workpiece holder, the workpiece comprising a sector of a cylinder, the cylinder having a pipe radius that is larger than an arm radius of the positioning stand arm, and optionally wherein the workpiece is held spaced from the positioning stand arm, a distance between the workpiece and the positioning stand arm in a direction approximately perpendicular to a longitudinal axis of the positioning stand arm being approximately equal to a difference between the pipe radius and the arm radius.

14. The method of claim 9, wherein determining the pipe welding technique score comprises:
determining a first technique parameter based on the first sensor data;
determining a second technique parameter based on the second data; and
determining the technique score based on the first technique parameter and the second technique parameter, and optionally
wherein the first technique parameter or the second technique parameter comprises a work angle, a travel angle, a travel speed, a travel direction, a contact tip to work distance, an arc length, an aim, a filler rod feed length, a filler rod feed rate, and/or a weave parameter.

15. The method of claim 9, wherein the sensor and the user interface are part of a mobile device.
